# EUROPÄISCHE PATENTSCHRIFT

(11) **EP 0 692 645 B1**
(45) Veröffentlichungstag und Bekanntmachung des Hinweises auf die Patenterteilung: **13.11.2002**
(21) Anmeldenummer: 95106711.5
(22) Anmeldetag: 28.04.1995
(51) Int. Cl.: F16C 25/06

(54) **Lagerung einer Getriebewelle**
Bearing of a gear shaft
Palier d'un arbre de transmission

(30) Priorität: 15.07.1994 DE 4425023
(43) Veröffentlichungstag der Anmeldung: 17.01.1996
(73) Patentinhaber: Volkswagen Aktiengesellschaft, 38436 Wolfsburg (DE)
(72) Erfinder: Noodt, Manuel, Dipl.-Ing., D-38440 Wolfsburg (DE); Sendzik, Klaus, Dipl.-Ing., D-38104 Braunschweig (DE)

(56) Entgegenhaltungen:
- EP-A- 0 169 034
- WO-A-88/02320
- DE-A- 3 525 691
- GB-A- 1 208 133
- US-A- 4 626 111

## Beschreibung

Die Erfindung betrifft eine Anordnung mit Schaltgetriebe gemäß den Oberbegriff des Anspruchs 1, wie es aus der WO88/02320 bekannt gewerden ist.

Bei Schaltgetrieben, z. B. Wechselgetrieben in Kraftfahrzeugen, ist es üblich, zur Verbesserung der Schaltbarkeit Lagerungen von Getriebewellen mit Spiel zu verbauen.
Das Spiel reduziert Lagerreibmomente, was sich im Schaltkomfort positiv niederschlägt. Nachteilig sind die spielbedingten, ungünstigen Lagerbedingungen und eine mögliche Schiefstellung der Getriebewelle, die geräuscherhöhend und lebensdauervermindernd ist.
Diese Probleme können in verstärktem Maße auftreten, wenn es aufgrund unterschiedlicher Ausdehnungskoeffizienten zwischen Getriebegehäuse und Getriebewelle zu einer Spielvergrößerung kommt.

Aus mit hohen Kräften belasteten Rotationsmaschinen oder Kompressoren ist es bekannt, zum Ausgleich von axialen, in Wellen wirkenden Lasten hydraulisch beaufschlagte, axial verschiebbare Kolben vorzusehen. Diese wirken z. B. gemäß EP-03 48 417 B1 axiallastabhängig auf äußere Lagerringe von Kugellagern einer Welle. Die Kugeln übertragen die Axialkraft auf Lagerinnenringe, welche die Welle entgegen einer axialen Betriebslast entlasten.

Der Erfindung liegt die Aufgabe zugrunde, eine Lagerung einer Getriebewelle zu schaffen, welche einerseits ein geringes Lagerreibmoment aufweist, andererseits günstige Lagertragbedingungen aufweist und Schiefstellungen der Getriebewelle vermeidet.

Die Lösung dieser Aufgabe gelingt mit den Merkmalen des Patentanspruches 1.
Weitere vorteilhafte Ausgestaltungen der Erfindung sind in den abhängigen Ansprüchen benannt.

Wenn eine gattungsgemäße. Anordnung mit Schaltgetriebe die Merkmale der kennzeichnenden Teils der Anspruch 1 aufweist, so ist einerseits bei unterbrochener Leistungübertragung, also bei zwecks Gangwechsel geöffneter Schaltkupplung durch das dann freigegebene Spiel, das Lagerreibmoment gering und ein guter Schaltkomfort ist erreicht. Das Mittel ist dabei zumindest so lange abgeschaltet, wie ein Getriebegangwechsel vorgenommen wird. Andererseits ist bei geschlossener Schaltkupplung und Leistungsübertragung durch das Getriebe das Spiel aufgehoben, wodurch optimale Lagertragbedingungen gegeben und spielbedingte Schiefstellungen der Getriebewelle vermieden sind.

In vorteilhafter Ausgestaltung können die Mittel dabei durch eine mechanische Ankopplung des Ausrücklagers der Schaltkupplung an ein auf den im Gehäuse verschiebbar gelagerten Außenring des Lagers wirkenden Stempel gebildet sind. Diese Lösung bietet sich bei mechanisch betätigten Schaltkupplungen an, wobei die zum Betätigen der Kupplung benötigte Kraft diese Mittel betätigen.

Bei hydraulisch betätigten Schaltkupplungen können die Mittel durch einen Hydraulikring gebildet sein, der mit einer Druckölquelle verbindbar ist und einen verschiebbaren, auf den Außenring des Lagers wirkenden Kolben aufweist. Als Druckölquelle wird dabei zweckmäßigerweise die die Schaltkupplung betätigende Quelle benutzt.

In weiterer Ausgestaltung der hydraulischen Betätigung kann insbesondere für nicht synchronisierte Gangwechsel vorgesehen sein, daß bei geöffneter Schaltkupplung die Mittel zeitweise zugeschaltet sind und zwar dann, wenn ein Schalthebel zur Betätigung des Getriebes in einer Vorwählgasse einer Kulisse in eine Stellung vor eine den nicht synchronisierten Gangwechsel ermöglichende Schaltgasse bewegt wird. Durch das dann erhöhte Lagerreibmoment wird die Drehzahl der Getriebewelle stärker verzögert und es kommt zu einer geringeren Drehzahldifferenz zwischen den miteinander zu koppelnden Schalträdern bzw. Schiebemuffen. Wird der Gangwechsel dann durch Verschwenken des Schalthebels in der entsprechenden Schaltgasse eingelegt, werden die Mittel erneut abgeschaltet, wodurch ein komfortables Schaltgefühl erzeugt wird.

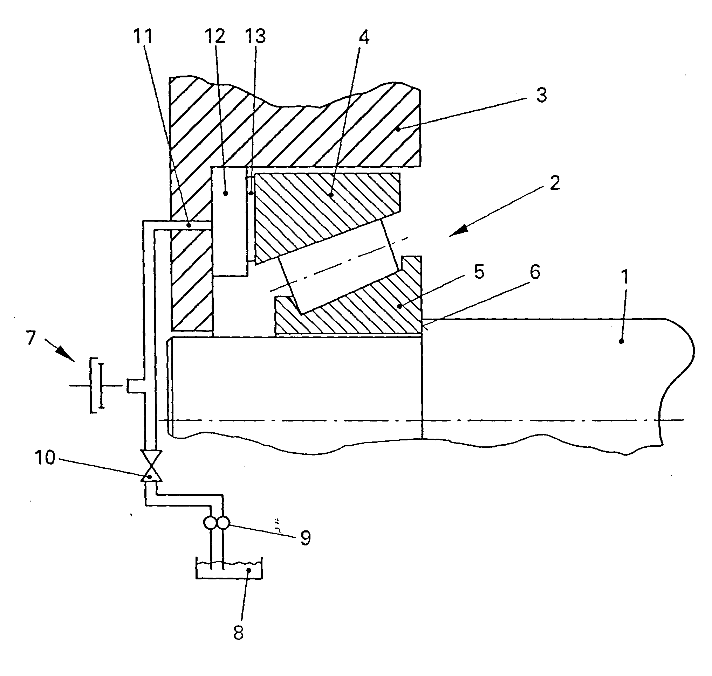

Die Erfindung wird nachfolgend anhand einer Zeichnung beispielhaft näher erläutert.
In der einzigen Figur ist eine Getriebewelle 1 mittels eines als Kegelrollenlager ausgebildeten Lagers 2 in einem Getriebegehäuse 3 gelagert, wobei diese Getriebewelle 1 die Eingangswelle des Schaltgetriebes ist.
Ein Außenring 4 des Lagers 2 ist verschiebbar mit losem Sitz im Getriebegehäuse 3 gelagert, während ein Innenring 5 an einem Bund 6 der Getriebewelle 1 anliegt.

Der Getriebewelle 1 ist eine nur symbolisch dargestellte, hydraulisch betätigte Schaltkupplung 7 zugeordnet. Diese wird über eine aus einem Öltank 8 saugende Pumpe 9 und ein Ventil 10 mit Drucköl beaufschlagt.
Das Getriebegehäuse 3 weist im Bereich des Außenringes 4 einen mit dem Ventil 10 verbundenen Hydraulikanschluß 11 auf. zwischen Außenring 4 und Getriebegehäuse 3 ist ein Hydraulikring 12 angeordnet, in welchem ein verschiebbarer, axial auf den Außenring 4 wirkender Kolben 13 angeordnet ist.

Dem Schaltgetriebe ist weiterhin ein üblicher, nicht gezeigter, in einer Kulisse geführter Schalthebel zur Gangwahl zugeordnet. Diese Kulisse weist eine Vorwählgasse und quer dazu abzweigende Schaltgassen auf.

Im Betrieb des Schaltgetriebes wird bei geschlossener Schaltkupplung 7 und einem eingelegten Gang Leistung übertragen. Die Pumpe 9 fördert Drucköl auf den Kolben 13, welcher derart auf das Lager 2 wirkt, daß das zwischen Getriebewelle 1 und diesem Lager 2 wirkende Spiel aufgehoben ist.
Wird die Leistungsübertragung zum Zwecke eines Gangwechsels unterbrochen, wobei die Schaltkupplung 7 geöffnet ist, fällt der Druck auf den Kolben 13 ab und das Spiel stellt sich ein. Wird der Wählhebel in der Vorwählgasse in die Stellung vor die einem unsynchronisierten Rückwärtsgang zugeordnete Schaltgasse gebracht, so wird kurzzeitig erneut der Kolben 13 mit Drucköl beaufschlagt, bis das dadurch erhöhte Lagerreibmoment im Lager 2 die Drehzahl der Getriebewelle 1 reduziert hat. Wird dann der Wählhebel zum Gangeinlegen in der Schaltgasse verschwenkt,
fällt der Druck am Kolben 13 erneut ab, so daß ein komfortables Schaltgefühl beim Einlegen des Ganges am Wählhebel entsteht.

## Patentansprüche

1. Anordnung, die ein Schaltgetriebe mit einem Getriebegehäuse (3), einer in dem Getriebegehäuse (3) gelagerten Getriebewelle (1) sowie einem zwischen dem Getriebegehäuse (3) und der Getriebewelle (1) angeordneten Lager (2), welches einen am Getriebegehäuse (3) anliegenden und bezüglich diesem verschiebbaren Außenring (4) und einen an der Getriebewelle (1) anliegenden Innenring (5) aufweist, wobei das Lager (2) derart angeordnet und ausgebildet ist, dass sich ein vorbestimmtes Lagerspiel ergibt, sowie eine Kupplung (7) aufweist, welche die Getriebewelle wahlweise mit einem Antrieb verbindet,
**dadurch gekennzeichnet, daß**
ein den Außenring (4) des Lagers (2) wahlweise axial mit Kraft beaufschlagendes Andruckmittel (13) vorgesehen ist, welches mit einem die Kupplung (7) betätigenden Mechanismus (8, 9, 10) derart verbunden ist, daß das Andruckmittel (13) bei zur Leistungsübertragung geschlossener Kupplung (7) eine axiale, das vorbestimmte Spiel reduzierende Kraft auf den Außenring (4) und bei zur Unterbrechung der Leistungsübertragung geöffneter Kupplung zumindest zeitweise keine axiale Kraft auf den Außenring (4) ausübt.

2. Anordnung mit Schaltgetriebe nach Anspruch 1,
**dadurch gekennzeichnet, daß**
das Andruckmittel (13) einen mechanisch mit einem Ausrücklager der Kupplung (7) verbundenen Stempel aufweist.

3. Anordnung mit Schaltgetriebe nach Anspruch 1,
**dadurch gekennzeichnet, daß**
das Andruckmittel (13) einen mit einer Druckölquelle (8, 9, 10) verbundenen und verschiebbaren, das Spiel aufhebenden Kolben (13) mit einem Hydraulikring (12) aufweist.

4. Anordnung mit Schaltgetriebe nach Anspruch 1,
**dadurch gekennzeichnet, daß**
ein in einer Kulisse mit Vorwählgasse und entsprechenden Schaltgassen geführter Schalthebel zum wahlweise Ein- und Ausrücken von Gängen des Schaltgetriebes vorgesehen ist, wobei der Betätigungsmechanismus der Kupplung (7) derart das Andruckmittel (13) ansteuernd ausgebildet ist, daß das Andruckmittel (13) auch bei zur Unterbrechung der Leistungsübertragung geöffneter Kupplung (7) eine axiale, das vorbestimmte Spiel reduzierende Kraft auf den Außenring (4) ausübt, wenn sich der Schalthebel in der Vorwählgasse der Kulisse in einer Stellung vor einer der Schaltgassen befindet.

## Claims

1. Arrangement which has a manual transmission with a transmission case (3), a gearbox shaft (1) mounted in the transmission case (3) and a bearing (2) arranged between the transmission case (3) and the gearbox shaft (1), which bearing has an outer ring (4), which abuts against the transmission case (3) and can be displaced with respect thereto, and an inner ring (5), which abuts against the gearbox shaft (1), the bearing (2) being arranged and embodied in such a manner that a predetermined bearing play results, and has a clutch (7) which optionally connects the gearbox shaft to a drive, **characterized in that** there is a pressure-exerting means (13), which optionally applies axial force to the outer ring (4) of the bearing (2) and is connected to a mechanism (8, 9, 10) which actuates the clutch (7) in such a manner that the pressure-exerting means (13), when the clutch (7) is closed for power transmission, exerts an axial force, which reduces the predetermined play, on the outer ring (4) and, when the clutch is open in order to interrupt power transmission, at least at times does not exert any axial force on the outer ring (4).

2. Arrangement with manual transmission according to Claim 1, **characterized in that** the pressure-exerting means (13) has a ram which is mechanically connected to a release bearing of the clutch (7).

3. Arrangement with manual transmission according to Claim 1, **characterized in that** the pressure-exerting means (13) has a piston (13) which is connected to a pressure oil source (8, 9, 10), is displaceable, cancels out the play and has a hydraulic ring (12).

4. Arrangement with manual transmission according to Claim 1, **characterized in that** there is a gear lever, which is guided in a gate with preselection gate arm and corresponding shift gate arms, for optionally engaging and releasing gears of the manual transmission, the actuating mechanism of the clutch (7) being designed to control the pressure exerting means (13) in such a manner that the pressure-exerting means (13), even when the clutch (7) is open in order to interrupt the power transmission, exerts an axial force, which reduces the predetermined play, on the outer ring (4) when the gear lever is in the preselection gate arm of the gate in a position in front of one of the shift gate arms.

## Revendications

1. Agencement, comprenant une transmission à changement de vitesse avec un carter de transmission (3), un arbre de transmission (1) monté dans le carter de transmission (3) ainsi qu'un palier (2) disposé entre le carter de transmission (3) et l'arbre de transmission (1), lequel présente une bague extérieure (4) en appui contre le carter de transmission (3) et déplaçable par rapport à celui-ci et une bague intérieure (5) en appui contre l'arbre de transmission (1), le palier (2) étant disposé et réalisé de telle sorte que l'on obtienne un jeu de palier prédéterminé, et présente aussi un embrayage (7), qui relie l'arbre de transmission de manière sélective à un entraînement,
**caractérisé en ce**
**qu'**il est prévu un moyen de pression (13) sollicitant axialement avec une force, de manière sélective, la bague extérieure (4) du palier (2), lequel moyen de pression est connecté à un mécanisme (8, 9, 10) actionnant l'embrayage (7) de telle sorte que le moyen de pression (13), lorsque l'embrayage (7) est fermé en vue de la transmission de puissance, exerce une force axiale, réduisant le jeu prédéterminé sur la bague extérieure (4), et lorsque l'embrayage est ouvert en vue de l'interruption de la transmission de puissance, n'exerce au moins partiellement aucune force sur la bague extérieure (4).

2. Agencement, comprenant une transmission à changement de vitesse selon la revendication 1, **caractérisé en ce que** le moyen de pression (13) présente un tampon connecté mécaniquement à un manchon de débrayage de l'embrayage (7).

3. Agencement, comprenant une transmission à changement de vitesse selon la revendication 1, **caractérisé en ce que** le moyen de pression (13) présente un piston (13) connecté avec une source d'huile sous pression (8, 9, 10) et déplaçable, éliminant le jeu, et comprenant une bague hydraulique (12).

4. Agencement, comprenant une transmission à changement de vitesse selon la revendication 1, **caractérisé en ce qu'**il est prévu un levier de changement de vitesses guidé dans une coulisse avec une voie de présélection et des voies de changement de vitesse correspondantes, pour l'enclenchement et le désenclenchement de vitesses de la transmission à changement de vitesses, le mécanisme d'actionnement de l'embrayage (7) étant réalisé de manière à commander le moyen de pression (13) de telle sorte que le moyen de pression (13) exerce une force axiale réduisant le jeu prédéterminé sur la bague extérieure (4) même lorsque l'embrayage (7) est ouvert en vue de l'interruption de la transmission de puissance, lorsque le levier de changement de vitesses se trouve dans la voie de présélection de la coulisse dans une position avant l'une des voies de changement de vitesses.
